# EUROPEAN PATENT SPECIFICATION

(11) **EP 2 769 654 B1**
(45) Date of publication and mention of the grant of the patent: **02.09.2020**
(21) Application number: 13398003.7
(22) Date of filing: 24.02.2013
(51) Int. Cl.: A47J 37/06, A47J 37/07

(54) **Gas grill and method thereof**
Gasgrill und Verfahren dafür
Gril à gaz et procédé associé

(43) Date of publication of application: 27.08.2014
(73) Proprietor: Grelhaço-Indústria de Artigos em Aço Inox, Lda., 4455-520 Perafita (PT)
(72) Inventor: Oliveira Maia, Américo Fernando, 4450-657 Matosinhos (PT)
(74) Representative: Pelayo de Sousa Henriques, Rui

(56) References cited:
- FR-A- 1 192 864
- FR-A1- 2 727 300
- FR-A1- 2 975 883
- JP-A- 2004 113 697
- US-A1- 2007 221 202
- US-A1- 2009 272 278

## Description

### Field of the invention

The present invention relates to a gas grill and the respective grill method.

### Prior art

For many years the industry has been marketing apparatus for food preparation, such as furnaces, stoves and grills.

The furnaces are primarily used to roast food placed inside containers (such as, for example, pots, roasting tins, etc.) or for baking inside containers (e.g. cake tins) or on trays (such, for example, as with bread). They are generally essentially formed by substantially closed cavities typically provided with a door with provides access to the interior thereof. Ovens usually burn wood or gas or are electric.

Stoves are mainly intended for cooking food contained inside containers (pans, pots, pans, boilers, etc.) Stoves usually burn gas or are electric.

Grills are intended to grill solid food, either arranged on grids, or pushed through brochettes (usually rotating ones). The grills usually burn charcoal or gas (in this case possibly through a volcanic stone) or are electric.

The diversity of devices that the industry has being marketing is huge, pursuing to tailor the use specifications thereof to the specific needs of the consumers, depending on its type, and in particular depending on the intend use; individual or industrial use (in particular by the catering industry).

Therefore, market demand regarding grills has ruled that industrial grills for the catering industry are fixed apparatus; domestic grills used in house kitchens are usually apparatus operating electrically (these electric grills being in short typically referred to as grills); and the household apparatus intended for outdoor barbecues (usually known as barbecues) burn coal.

Each of the mentioned energy sources is however associated both to certain advantages and to some drawbacks as well.

Therefore, it is known that the traditional charcoal grills or even gas grills with volcanic bedrock, present problems arising from the creation of carcinogen substances in the smoke, in particular from the burning of fat drops that fall directly on the heat source.

Various solutions have been adopted to try to solve this problem, as shown, for example, in PT 93201 - where lateral heat sources were provided, disposed below the plane of the grid but outside the area bellow the food cooking area on the grid - as well as in PT 9287 U and in PT 101735, where either specific deflectors or grids having a deflecting function are provided. In FR 2912048A is disclosed a gas grill combining both heat sources mainly laterally disposed and provided with an irradiating surface that emits an infrared radiation towards the grid, and at least a convective heat source provided with deflectors. All heat sources are disposed below the plane of the grid..

In WO2006/009932 is described a grill also with a heat source located under the plane of the grid for the food, such grill making use of an emitter of infrared radiant energy, placed 25.4 mm, or less, above the surface of combustion of a gas burner. This grill is characterized by the use of a thick grid defining reflective cavities which make uniform the distribution of radiation towards the food. Such a grid is placed resting on the radiant emitting surface or in the immediate vicinity thereof and has a thickness between 12.7 mm and 38.1 mm, this being the distance between the lower surface of the food and the emitting surface of the radiant energy emitter. The grid increases the emitting surface of the radiant emitter and creates cavities that are closed or nearly closed, lower down by the surface of the emitter and laterally by the walls of said grid. All radiation is forced out from the top of said grid. To avoid flare-ups the temperature of said radiant energy emitter is maintained below 454 °C or even 426 °C and no secondary air is allowed to the gas combustion, an atmosphere mainly composed of CO₂ being maintained in said cavities. On a plane located 19.05 mm above the surface of the emitter, and at most 58.4 mm above the surface of said radiant energy emitter, temperatures are only in the range of 366 °C to 387 °C.

On the other hand, the electricity, besides entailing a higher cost, has the disadvantage of strongly limiting the portability of equipments depending on it, due to the need for them to be permanently plugged to the power network during operation.

Therefore, these and other limitations, determine that, notwithstanding the huge variety of existing equipment, the industry of this field continues always trying to develop new equipment able to provide new, practical or technical, advantages i.e. a better use.

There are strong reasons justifying that traditionally the heat source in grills is positioned at a level below the one of the food to grill, such a heat source being known as an "inferior heat source":
i) The traditional charcoal heat source or lava rocks, implies the heat source to be an inferior heat source due to the difficulty of securing charcoal unless where the latter is supported from below;
ii) Heat transfer by convection, which plays a significant role with respect to such heat sources, occurs from bottom to top.

The inferior heat sources, however, have two major drawbacks:
i) The fat drops fall on the heat source, causing flare-ups and creating benzopyrenes which are substances with high carcinogenic potential;
ii) The grid supporting the food is interposed between the heat source and the food implying that the grid is the first to be heated. Therefore, it reaches high temperatures marking the food. "Marking the food" as used herein, means the charring (at least partial) of the food in the marked areas, such charring corresponding to the creation of undesirable compounds.

The first drawback has been tackled either by adopting special grids, or by protecting the heat source, in the case of heat sources in the form of tubular gas burners, or even by using lateral heat sources as in PT93201.

The heat sources from above which are typical, for example, in the electric grills (grills) have the disadvantage that they are generally inefficient because heat transfer by convection is wasted. Therefore, these heat sources are typically used on devices which in addition to functioning as grills can function primarily as ovens, thus having a closed chamber which is accessed through a door. Thus heat losses by convection are minimized given the closed nature of said chamber. Additionally, in particular in the case of both electric ovens with grill and microwave ovens with grill, there is a fan that, providing air circulating inside the chamber, facilitates the transmission of heat by convection. However, in grills as such - i.e., grills without oven function - either in the case of industrial grills or barbecue type grills there is no such closed chamber, and thus the loss of efficiency due to heat losses by convection has led to the non use of heat sources above the food. Henceforth in this document, such grills will be called or referred to as open chamber grills.

The use of sealed chambers is more suitable for use as an oven, where there are relatively high stage times of the food within the chamber. In grilling, in particular in grilling as conducted in the catering industry, especially in restaurants and similar the time taken for grilling each piece should be relatively small. Otherwise the kitchen would not be able to timely comply with the requests from the tables. However, frequent opening of the closed chambers, not only is inconvenient for the operator, but also ultimately reduce the effect of the closed chambers, due to the accumulation of heat losses, through the respective doors, caused by successively opening such doors. Moreover, the tight control required by the grilling operation, to be exerted by the operator, is difficult to perform when closed chambers are used, even when these are fitted with glass windows for viewing the inside.

FR 2 975 883 A1 and US 2009/272278 A1 disclose a gas grill comprising an open chamber with a heat source positioned above the zone supporting the food to be grilled, and possibly a water tray catching drops, wherein the heat source is constituted by at least one burner of combustible gas, provided with a micro-perforated plate (7) irradiating heat. FR 2 975 883 A1 further discloses that the radiant gas burners are provided at its faces with a plate of stainless steel perforated in a pattern of bee nest and 20 to 30mm below with a self cleaning anti projection screen by pyrolysis working at a temperature of about 1000 °C. US 2009/272278 A1 further discloses the use of a commercially available flexible adhesive material capable of withstanding the heat generated by the burner during use, which may be in the range of up to 1500 °C.

The grilling operation involves very complex processes of food processing. Such processes are not completely known both physically as well as chemically. Also contributes to this complexity the fact that each food has its own behaviour. For example, meat behaves differently from fish or vegetables. However, even within the same type of food, such as meat, there are significant differences depending on the species in question. It is known that the meat of birds has a different behaviour than the cow beef. Furthermore, even for the same species differences resulting from the specific part of the animal and/or the thickness and/or the configuration of the piece or portion going to be grilled also have significant influence on the final result. This complexity leads the grilling to be a method that is very much based on empiricism.

Another difficulty is that, depending on the type of food, the optimal result also depends on the eating habits in each country or region. For example, while it is true that according to Western standards of consumption, there is a significant share of consumers who admits, or even prefer, cow beef not well done or rare, generally nobody in the West, likes rare grilled fish. In Japan, for example, there are very different habits, being traditional to eat raw fish, sushi in particular.

Yet another difficulty lies in the question of the grilling time. Indeed, while in the case of equipment like barbecues, especially the movable ones, they are intended for users who usually prepare their own meals, for example, in the gardens of their houses or in specific areas for grills in parks for picnic, campsites and similar - in which case the grilling time is usually not a critical factor - on the contrary, in the case of equipment for industrial use, in the catering industry, the average time for grilling each piece is obviously an important factor whose decrease is aimed. The most direct way of reducing the grilling time is to increase the power of the heat sources. However, this tends to lead to an excessive increase of the costs of the heat sources and/or to the grilled food to be marked.

Anyway, the lack of a thorough theoretical understanding of the processes involved as well as the different eating habits - with respect to both the types of foods that are grilled, and the degree of grilling correspondingly considered optimal by consumers of the various regions - are also factors that complicate the design and calculation of grills.

Indeed, in most cases, the sizing of the power of the heat sources, the choice of the dimensions of the chambers for grilling and of the distance separating the plan of the food from the heat source, more than dictated by calculation methods is typically a result of testing, taking into account, inter alia, taste factors like the ones above mentioned.

### Objectives

The present invention is mainly directed to a grill having an open chamber to grill food quickly and properly without getting the food marked by the respective Supporting grid and without any combustion of fats or juices falling from said food. In particular, a grill is intended to fulfil these objectives even while grilling meat, being that meat is generally more susceptible to the marking phenomenon than fish. Similarly, it is aimed a food grilling method reducing or suppressing the formation of benzopyrenes.

Another objective of the present invention is to provide a versatile grill able to be used both indoors and outdoors.

A further objective, especially regarding the use of the grill outdoors, is to provide a grill easily movable.

Still another objective is to provide a grill having a reduced mean grilling time, thus being particularly suitable for industrial use in the catering industry,

Other objectives of the invention will emerge from the reading of this description.

### Description of the invention

According to the invention, one uses a heat source positioned above the grid supporting the food, but seeks to avoid heat losses through convection, favouring heat transmission by radiation rather than conduction by convection.

Considering that food is interposed in-between the respective supporting grid and the heat source the food shadows on said grid with respect to the incident radiation and prevents the grid to overheat. Thus, food can be grilled without being marked. Moreover, the heat source being higher one realises that any juices or fat drops falling from food will never fall on the heat source, and thus the heat source does not need to be laterally pushed away, but rather can be placed parallel to and above the area of the food to be grilled, substantially above the zenith of food, allowing less radiation losses by reflection on the food. The reflection losses in case of fishes are generally more pronounced.

Also according to the invention, it was determined empirically, as a result of laborious experimentation, that, for the types of food that traditionally may be grilled - and considering the difficult (triple) balance involved in that the grilled food should be grilled quickly and well done inside, especially in the case of fish, but without entailing the undesirable marking of the outer surface of the food - one obtains results clearly above the ones of average conventional grill equipment, when one uses a gas grill comprising an open chamber with a heat source positioned above the zone supporting the food to be grilled, and a water tray catching drops (15), such grill having a heat source comprising at least one burner of combustible gas, provided with a micro-perforated plate irradiating heat, said at least one burner originating, when operating at the maximum operating power, temperatures that, in the area under the heat source and between two parallel planes spaced apart 1 cm from each other, the higher one being coincident with the bottom face(s) of said burner plate(s), range between 825 °C and 725 °C and, on a plane lower than said planes, parallel to them and separated apart 20 cm from said face(s), range between 105 °C and 180 °C, when the grill works empty, i.e., without food.

According to a preferred embodiment the grid(s) supporting the food is (are) arranged (each) in a plane parallel to the plane coincident with the bottom face(s) of the at least one burner and separated apart 10 to 25 cm from it.

In case there are several grids, the distance of each grid to said reference plane may not be the same for all of them, but preferably will be, in each case, within the ranges given above.

In the case of industrial equipment for the catering industry (e.g. restaurants) subject to intensive use, the exposed portions of the grid (the portions uncovered by the food being grilled at a given time) will receive radiation and will gradually warm-up. Since these grids are typically made of metallic material (good thermal conductor) the actual area supporting the food will warm-up over time, being that its excessive heating is undesirable because it will entail the marking of the food.

Therefore, according to the invention, a set of extra grids is provided, so that one always uses a so-called cold grid, i.e. grids not too hot. By too hot grids it is meant grids having a temperature sufficiently high so that they can cause food marking.

This can be done in one of two ways: either by substitution of the (so-called) main grid or by using one or more additional grids on the main Where reference is made to main grid in the singular, it should be understood that it also encompasses the case where the direct or indirect support of the food beneath the burners is made by more than one main grid, such main grids preferably being juxtaposed to each other.

In the case where use is made of additional grids, they are preferably chosen from among a set of additional grids so as to adapt substantially to the shape of each type of grilling food, the grids being under the food substantially all along its entire area, thus avoiding grid heating.

Furthermore, the thermal conduction between the grids (the main grid and the additional grids) is quite limited, due to the fact that their contact is merely punctual and consequently there is a reduced heat transmission area by conduction.

One should note that in the case of grills with the heat source beneath the plane of the grid, the use of either additional grids (so-called double grills) or replacement grids does not fully solve the problem of grids heating, because the grids even the replacement grids - are the ones that provide shade to the food and not the other way (considering the shadow by reference to the radiation irradiating from the heat source). Moreover, in many of the lower heat sources, heating by convection is significant, if not dominant, and in these cases, the whole grid area is substantially subject to such type of heating. This would apply even if one uses an additional grill or a replacement grill.

As mentioned above, to make the grill thermally efficient, emphasis was put on heat transmission by radiation, decreasing the heat losses by convection. Although it is known that infrared radiation is suitable for food preparation, such radiation is usually obtained by infrared electric heaters.

However the need for the electrical resistances to be supplied with electrical power decreases the portability of equipments with such electric resistance as they will need to be always near to a power socket outlet or to be associated with current generators. The use of current generators entails the direct inconvenience of the use of additional equipment - encompassing its purchase cost and the difficulty of its transportation has a further drawback drawn in by the respective noise, as they are usually noisy equipment. The use of an extension cord has another drawback resulting from the fact that the sockets generally have only one phase and one neutral when the grills for industrial use (catering industry) due to their high power consumption are usually designed as three-phase equipments. So, conventional sockets are not appropriate.

According to the invention the grill heat source is gas. The grill works with traditional bottled gas, but it can also be operated connected to the gas mains, whenever it is intended, by its user, to a fixed use (either indoors or outdoors) in a place having a gas network, and for so doing one shall only change the gas injectors, using the one adequate for each type of gas, according to what is usual in the art.

According to the invention it is further provided a grilling method such method consisting in grilling food in a grill according to the invention. This method is substantially based on the heat transmission to said food by irradiation from gas burners, such irradiation mainly irradiating the top side of said food.

### Brief description of the drawings

The accompanying drawings, given by way of illustration only and thus in a non-limitative way, illustrate an embodiment of the grill according to the invention, such grill being provided with:
- Four separate burners operated in pairs, thus giving two zones of grilling, such zones being able to be separated from each other by a removable separating plate;
- A main grid that supports two additional grids, one for each grilling area;
- An extra pair of additional grids.
   Figure 1 shows said grill in perspective.
   Figure 2 shows it according to the game perspective, but with a partial cut, for better viewing of the interior.
   Figure 3 shows it according to a right side view.
   Figure 4 shows it according to a front view.
   Figure 5 shows it in a plan view.
   Figure 6 shows it according to a left side view, in section.
   Figure 7 shows it according to a front view, in section.
   Figures 8 to 11 show the same grill according to a further embodiment of the invention, wherein the grill is configured as a grill comprising a mobile support structure for easy movement, such as wheels, and a cover with chimney.

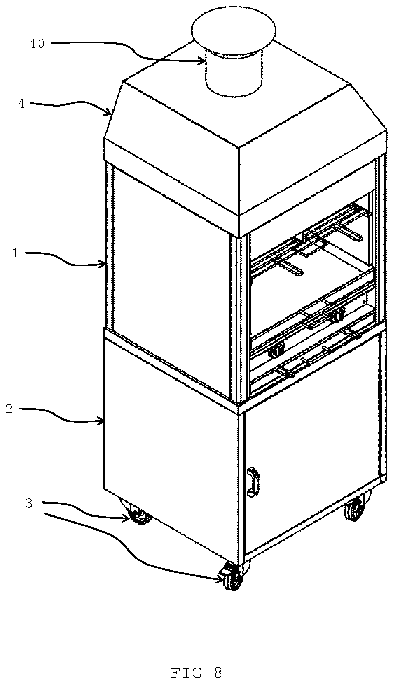

   Figure 8 depicts said grill in perspective.

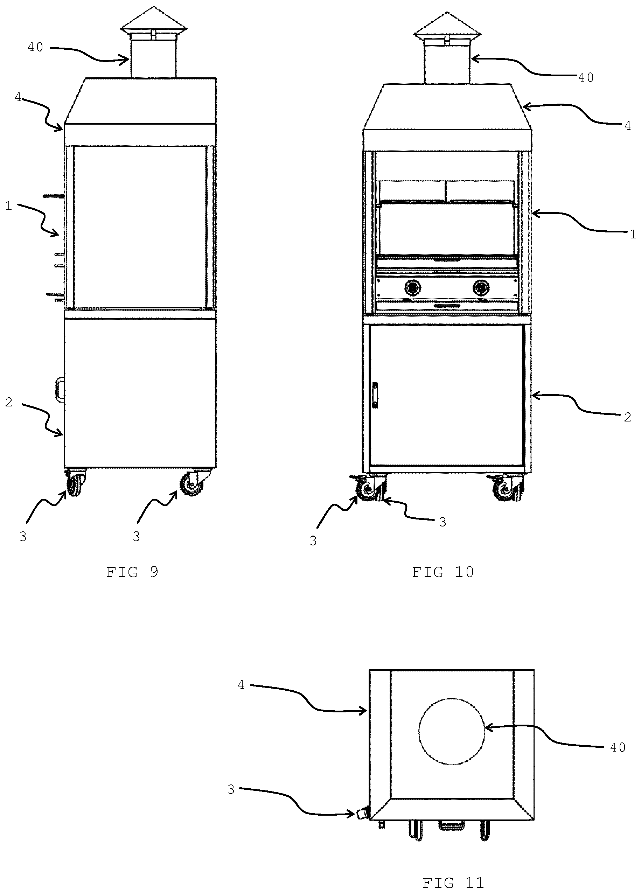

   Figure 9 depicts said grill according, Figure 10 according to a front view and Figure 11 according a plan view.

### A detailed description of the preferred embodiments

In the following a more detailed description is made, based on the preferred embodiments represented in the drawings.

Hereinafter, the references used in correspondence with the drawings are the following:
1 - Gas grill
   10 - Open chamber
   11 - Gas burners
      110 - Micro-perforated plate
   12 - Removable separating plate
   13 - Active main grid
   14 - Active additional grids
   15 - water tray catching drops
   16 - Protection tray
   17 - Knob of the gas throttle valve.
   18 - Extra (passive) additional grids
   19 - Tray supporting the extra grids.
2 - Support structure with compartment housing the gas bottle.
3 - Wheels (mobile and fixed)
4 - Cover
   40 - Chimney

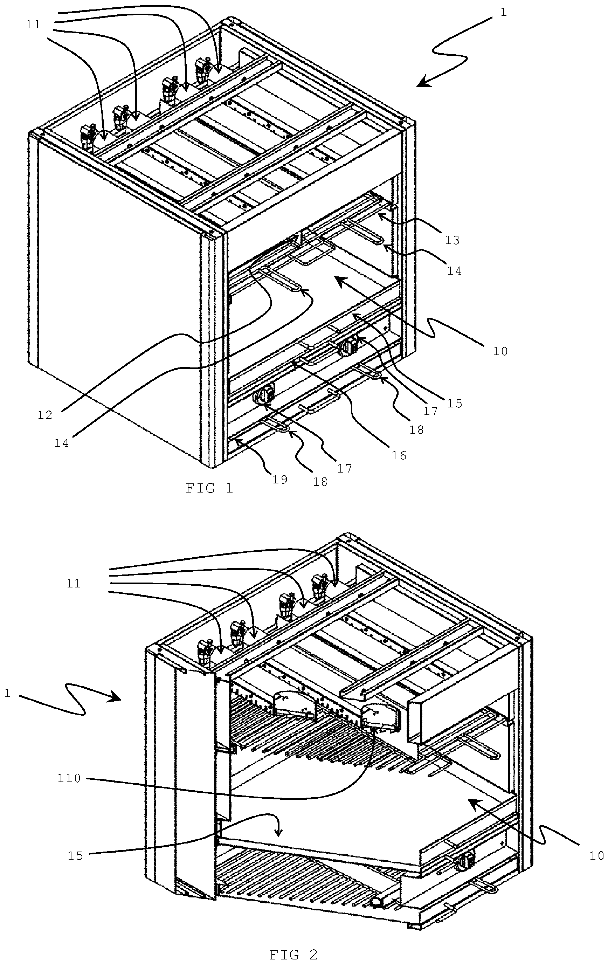

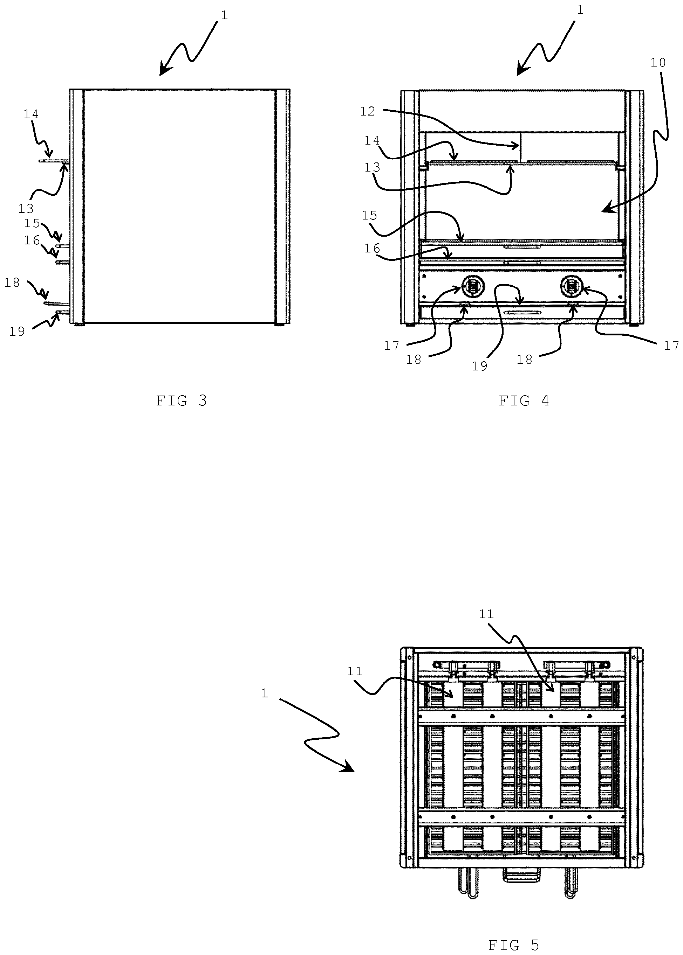

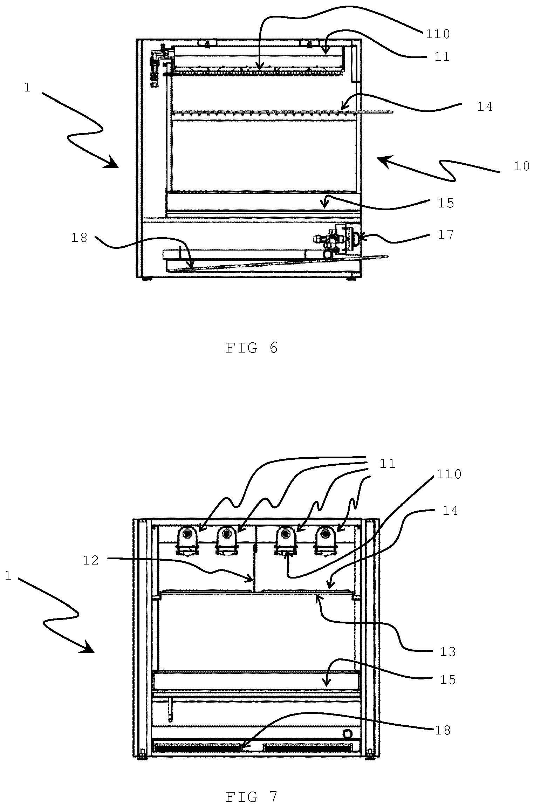

The grill according to Figures 1 to 7 is provided with an open chamber (10) whose top is provided with four gas burners (11) associated in pairs, the gas flow to each pair being regulated, independently and respectively, by operating a knob (17) of a pair of knobs disposed on the front panel of grill and connected to the respective control valves.

Preferably the knobs (17) for regulating the gas flow are positioned in a recessed area on the front panel of the grill avoiding the drops fall, as represented in Figure 1.

There is a separating plate (12) which prevents the mixing of smells when grilling different foods. Moreover, this plate prevents heat loss by radiation when the grill is in operation in part, with only a few burners (11) in operation.

The grilling of various types of food which may become contaminated with each other smells and/or undesirable tastes is made, therefore, so that such food is grilled simultaneously in separate sub-chambers in the open chamber (10) separated from each other and each fitted with at least one burner (11).

Such a plate (12) is removable, and, when one wants to grill a piece that occupies the entire grilling chamber (10), said plate is removed. According to an embodiment, this plate (12) has a curved edge which engages a curved edge of a matching fixed plate (or simply a rod) on the top of the chamber (10) between the burners (11) which one wants to separate, particularly between the two pairs of burners above mentioned.

Preferably, below the conventional water tray catching drops (15), there is a protection tray (16) able to slide. During the grilling operation, the operator, for better visualizing the state of the food being processed, often pulls out the grid. The fat droplets or juices dripping that may fall from the food during the period in which the food is pulled out do not fall into the conventional water tray (15) for catching the drops. The operator, in order to prevent such drops to fall on the ground, just needs to pull out the tray (16), by sliding it, and the latter will catch the drops.

The grill is also provided with a tray (19) which supports the additional grids (18). Such grids, called passive, either cool off on that board or are placed on it already cooled and are intended to replace the active additional grids (14) if they get too heated, e.g. when under long-lasting operation on of grilling. By replacing the active grids (14) are passive add additional grids (18) and vice versa.

Despite not being depicted in the accompanying Figures, the grill may be provided, for example below the tray (19) or instead such tray, with an area for storing at least one extra main grid for substitution. The passive extra main grids are intended to replace the active main grid (13).

The grilling is always made with the food supported on active cool grids, these being either the main grid (13) or the additional grids (14).

The micro-perforated plate (110) of the burners (11) preferably is made of ceramic material.

In an embodiment not shown in the Figures, the grill is provided with one or more lateral heat sources positioned in an area above the plane in which the food is supported.

The grilling of the food with a grill according to the invention is very fast notwithstanding the fact that the food will not get marked. An additional advantage of the grill according to the invention, particularly over charcoal grills or lava bed rock gas grills is that, unlike these - which need a considerable time to preheat before one can start grilling food - the grill according to the invention practically does not need preheating.

Another advantage is that the food does not grasp, i.e. does not become attached to the respective grids. This unexpected advantage of the present grill is particularly useful in the case of certain sensitive food such as fish, and solves the problem of peeling to which, for example, flounder and cod grill are often subject.

The grill according to Figures 8 to 11 is additionally configured as a mobile grill, specifically adapted for outdoor use.

Therefore it is provided with a support structure (2) with a housing compartment for the gas bottle that feeds the burners. This compartment is equipped with a door. Preferably, such a door is equipped with locks, which can be locked with a key.

In addition, the barbecue is provided with wheels (3) allowing it to be easily movable. The rear wheels have a fixed axis and the front ones a swivel axis, thereby facilitating the operation of moving the grill. The front wheels have brakes feet actuated.

On the other hand, the grill has a cover (4) that protects the upper portion of the open grilling chamber (10), preventing the falling into the grilling zone, from above, of foreign bodies, e.g. leaves, which can be present in the outdoor environment where the grill is intended to be used, and preventing as well the entry of rain. On the other hand, such a cover, along with the respective chimney (40), helps to promote the extraction of the moisture formed in the grilling chamber as well as of the combustion gases of the burned gas,

The chimney can be toped either by a conventional so-called Chinese type protecting hat, as shown in Figures 8 to 11, or alternatively by an conventional extractor wind powered.

According to a preferred embodiment not shown in the Figures, the grill is provided with a hinged lid which, when closed, covers the front opening of the chamber (10) and, when opened, create an covered area in front of the grill housing thereby the operator, either from the sun - shading the operator - or from direct rainfall. Such a cover articulates by any conventional means, on the front portion of the cover (4) being fixed on its raised position by means of any suitable traditional system, Said cover can have a length sufficient to cover the frontal portion of the compartment housing the gas bottle, when the cover is closed. In such a case, the door may be waived in such compartment. The cover can be fitted with lock keying.
A grill according to the invention will allow, for example, to solve the long-lasting problem, felt in Matosinhos - and other Portuguese cities, especially coastal cities - where traditional restaurants grill food, especially fish and in particular sardines, outdoor their premises, using for this purpose, charcoal grills. This practice causes environmental problems and, given the growing awareness of populations to environmental problems related to air quality, has resulted in increasingly more complaints, especially from residents living in the vicinity of such premises. This entails social and political problems which have been dragging, because the population files complaints with the related town administrative bodies or parish councils, which are very difficult to deal with, because the abolishment of such economic activities will have a significant social and economic effect upon the local economy, in particular due to the employments they generate in those towns.

The grill according to the invention, burning gas (clean combustion) being mobile and suitable for outdoor use, and having excellent ability to industrial level grilling - in the catering industry, especially for restaurants and the like - particularly in terms of time needed to grill food producing no-marked grill food (with no fumes generated from carbonization of food) and without skin peeling, is certainly a contribution to solving this long-lasting problem.

## Claims

1. Gas grill (1) comprising an open chamber (10) with a heat source positioned above the zone supporting the food to be grilled, and a water tray catching drops (15), wherein the heat source is constituted by at least one burner (11) of combustible gas, provided with a micro-perforated plate (110) irradiating heat, **characterized in that** said at least one burner is configured to originate, when operating at the maximum power, temperatures that, in the area under the heat source and between two parallel planes spaced apart 1 cm from each other, the higher one being coincident with the bottom face(s) of said plate(s) (110) of the at least one burner (11), range between 825 °C and 725 °C and, on a plane lower than said planes, parallel to them and separated apart 20 cm from said face(s), range between 105 °C and 180 °C, when the grill works empty, i.e., without food.

2. Grill according to claim 1, **wherein** the distance between the plane of grid(s) (13, 14) and the plane of the bottom face(s) of the micro-perforated plates of the at least one burner ranges between 10 and 25 cm.

3. Grill according to claim 1, **wherein** one or more lateral heat sources are provided, positioned in an area above the plane in which the food is supported.

4. Grill according to claim 1, **wherein** such grill is provided with at least one extra main grid and/or at least one extra additional grid (18), for replacement.

5. Grill according to claim 4, **wherein** such grill is provided with at least with one location (19) for storing and cooling extra grids for replacement, said location being substantially off the action of the heat source.

6. Grill according to claim 1, **wherein** such grill is provided with at least one removable separation plate (12) which divides the chamber (110) into separate sub-chambers each of which is heated by only part of the total number of burners (11).

7. Grill according to claim 1, **wherein** such grill is provided with a protection tray (16) sliding beneath the water tray catching drops (15).

8. Grill according to claim 1, **wherein** such grill is provided with a bottom support structure (2), housing the gas bottle.

9. Grill according to claim 8, **wherein** such grill is provided with wheels under the frame (2).

10. Grill according to claim 9, **wherein** the front wheels are hinged and provided with brake.

11. Grill according to claim 1, **wherein** such grill is provided with a cover (4) comprising a chimney (40).

12. Grill according to claim 11, **wherein** the chimney (40) is topped either by a Chinese type protective hat or a wind powered extractor.

13. Grilling method **wherein** the food is subjected to at least one positioning stage which is followed by a step of actual grilling, said positioning step comprising the positioning of the food to be grilled on a grid, in an open chamber (10) above a tray (15) with water and below a heat source consisting of at least one burner (11) of combustible gas, provided with a micro-perforated plate (110) irradiating heat, said at least one burner originating, when operating at the maximum power, temperatures that, in the area under the heat source and between two parallel planes spaced apart 1 cm from each other, the higher one being coincident with the bottom face(s) of said plate(s) (110) of the at least one burner (11), range between 825 °C and 725 °C and, on a plane lower than said planes, parallel to them and separated apart 20 cm from said face(s), range between 105 °C and 180 °C, when the grill works empty; and said step of actual grilling comprising a heat transfer to the food by means of irradiation from said at least one gas burner (11), such irradiation mainly irradiating the top side of said food.

14. Grilling method according to claim 13, **wherein** cold grids are used during the step of actual grilling.

15. Grilling method according to claim 13, **wherein** different types of food are subjected to the steps of placement and/or actual grilling simultaneously in separate sub-chambers of the open chamber (10), separated from each other and each one fitted with at least one burner (11).

## Patentansprüche

1. Gasgrill (1), der eine offene Kammer (10) mit einer Wärmequelle, die über der Zone positioniert ist, die die zu grillenden Lebensmittel stützt, und eine Wasserschale umfasst, die Tropfen (15) auffängt, wobei die Wärmequelle aus mindestens einem Brenner (11) von Brenngas besteht, der mit einer mikroperforierten Platte (110) bereitgestellt ist, die Wärme ausstrahlt, **dadurch gekennzeichnet, dass** der mindestens eine Brenner dazu konfiguriert ist, wenn er bei der Höchstleistung betrieben wird, Temperaturen auszugeben, die, im Bereich unter der Wärmequelle und zwischen zwei parallelen Ebenen, die um 1 cm voneinander beabstandet sind, wobei die höhere mit der/n Unterseitenfläche(n) der Platte(n) (110) des mindestens einen Brenners (11) übereinstimmt, zwischen 825 °C und 725 °C liegen und, auf einer Ebene, die niedriger ist als die Ebenen, parallel dazu und um 20 cm getrennt von der/n Fläche (n), zwischen 105 °C und 180 °C liegen, wenn der Grill leer arbeitet, d. h. ohne Lebensmittel.

2. Grill nach Anspruch 1, **wobei** der Abstand zwischen der Ebene von (einem) Gitter(n) (13, 14) und der Ebene der Unterseitenfläche(n) der mikroperforierten Platten des mindestens einen Brenners zwischen 10 und 25 cm liegt.

3. Grill nach Anspruch 1, **wobei** eine oder mehrere laterale Wärmequellen bereitgestellt sind, die in einem Bereich über der Ebene positioniert sind, in welcher die Lebensmittel gestützt sind.

4. Grill nach Anspruch 1, **wobei** ein derartiger Grill mit mindestens einem weiteren Hauptgitter und/oder mindestens einem weiteren zusätzlichen Gitter (18) als Ersatz bereitgestellt ist.

5. Grill nach Anspruch 4, **wobei** ein derartiger Grill mit mindestens einem Ort (19) zum Lagern und Kühlen von weiteren Gittern als Ersatz bereitgestellt ist, wobei der Ort im Wesentlichen von der Wirkung der Wärmequelle entfernt ist.

6. Grill nach Anspruch 1, **wobei** ein derartiger Grill mit mindestens einer entfernbaren Trennplatte (12) bereitgestellt ist, welche die Kammer (110) in getrennte Unterkammern teilt, wobei jede davon durch nur einen Teil der Gesamtanzahl von Brennern (11) erhitzt wird.

7. Grill nach Anspruch 1, **wobei** ein derartiger Grill mit einer Schutzschale (16) bereitgestellt ist, die unter die Wasserschale gleitet, die Tropfen (15) auffängt.

8. Grill nach Anspruch 1, **wobei** ein derartiger Grill mit einer Bodenstützstruktur (2) bereitgestellt ist, die die Gasflasche umschließt.

9. Grill nach Anspruch 8, **wobei** ein derartiger Grill mit Rädern unter dem Rahmen (2) bereitgestellt ist.

10. Grill nach Anspruch 9, **wobei** die Vorderräder Scharniere aufweisen und mit einer Bremse bereitgestellt sind.

11. Grill nach Anspruch 1, **wobei** ein derartiger Grill mit einer Abdeckung (4) bereitgestellt ist, die einen Schornstein (40) umfasst.

12. Grill nach Anspruch 11, **wobei** sich auf dem Schornstein (40) entweder ein Schutzhut chinesischer Art oder eine durch Windkraft angetriebene Absaugvorrichtung befindet.

13. Grillverfahren, **wobei** die Lebensmittel mindestens einer Positionierungsstufe unterzogen werden, welche durch einen Schritt des tatsächlichen Grillens gefolgt wird, wobei der Schritt des Positionierens das Positionieren der zu grillenden Lebensmittel auf einem Gitter, in einer offenen Kammer (10) über einer Schale (15) mit Wasser und unter einer Wärmequelle, die aus mindestens einem Brenner (11) von Brenngas besteht, umfasst, der mit einer mikroperforierten Platte (110) bereitgestellt ist, die Wärme ausstrahlt, wobei der mindestens eine Brenner, wenn er bei der Höchstleistung betrieben wird, Temperaturen ausgibt, die, im Bereich unter der Wärmequelle und zwischen zwei parallelen Ebenen, die um 1 cm voneinander beabstandet sind, wobei die höhere mit der/n Unterseitenfläche(n) der Platte(n) (110) des mindestens einen Brenners (11) übereinstimmt, zwischen 825 °C und 725 °C liegen und, auf einer Ebene, die niedriger ist als die Ebenen, parallel dazu und um 20 cm getrennt von der/n Fläche(n), zwischen 105 °C und 180 °C liegen, wenn der Grill leer arbeitet; und wobei der Schritt des tatsächlichen Grillens eine Wärmeübertragung auf die Lebensmittel durch Ausstrahlung von dem mindestens einen Gasbrenner (11) umfasst, wobei die Ausstrahlung vor allem auf die Oberseite der Lebensmittel ausstrahlt.

14. Grillverfahren nach Anspruch 13, **wobei** kalte Gitter während des Schritts des tatsächlichen Grillens verwendet werden.

15. Grillverfahren nach Anspruch 13, **wobei** unterschiedliche Arten von Lebensmitteln den Schritten von Platzieren und/oder tatsächlichem Grillen gleichzeitig in getrennten Unterkammern der offenen Kammer (10), getrennt voneinander und jeweils mit mindestens einem Brenner (11) ausgestattet, unterzogen werden.

## Revendications

1. Gril à gaz (1) comprenant une chambre ouverte (10) avec une source de chaleur positionnée au-dessus de la zone supportant les aliments à griller et un bac à eau récupérant les gouttes (15), la source de chaleur étant constituée par au moins un brûleur (11) de gaz combustible, muni d'une plaque micro-perforée (110) irradiant de la chaleur, **caractérisée en ce que** ledit au moins un brûleur est configuré pour générer, lorsqu'il fonctionne à la puissance maximale, des températures qui, dans la zone sous la source de chaleur et entre deux plans parallèles espacés de 1 cm l'un de l'autre, le plus haut coïncidant avec la ou les faces inférieures desdites plaques (110) du au moins un brûleur (11), sont comprises entre 825 °C et 725 °C et qui, sur un plan inférieur auxdits plans, parallèle à ceux-ci et séparé 20 cm de ladite ou desdites faces, sont comprises entre 105 °C et 180 °C, lorsque le gril fonctionne à vide, c'est-à-dire sans nourriture,

2. Grill selon la revendication 1, **dans lequel** la distance entre le plan de la grille ou des grilles (13, 14) et le plan de la ou des faces inférieures des plaques micro-perforées du au moins un brûleur est comprise entre 10 et 25 cm.

3. Grill selon la revendication 1, **dans lequel** une ou plusieurs sources de chaleur latérales sont prévues, positionnées dans une zone au-dessus du plan dans lequel les aliments sont supportés.

4. Grill selon la revendication 1, **dans lequel** ce grill est pourvu d'au moins une grille principale supplémentaire et / ou d'au moins une grille additionnelle supplémentaire (18), pour remplacement.

5. Grill selon la revendication 4, **dans lequel** ce grill est pourvu d'au moins un emplacement (19) pour stocker et refroidir des grilles supplémentaires à remplacement, ledit emplacement étant sensiblement hors de l'action de la source de chaleur.

6. Grill selon la revendication 1, **dans lequel** ce grill est pourvu d'au moins une plaque de séparation amovible (12) qui divise la chambre (110) en sous-chambres séparées dont chacune n'est chauffée que par une partie du nombre total de brûleurs (11).

7. Gril selon la revendication 1, **dans lequel** ce gril est pourvu d'un plateau de protection (16) coulissant sous le bac à eau pour attraper les gouttes (15).

8. Grill selon la revendication 1, **dans lequel** ce grill est pourvu d'une structure de support inférieure (2), logeant la bouteille de gaz.

9. Grill selon la revendication 8, **dans lequel** ce grill est muni de roues sous le châssis (2).

10. Grill selon la revendication 9, **dans lequel** les roues avant sont articulées et munies de frein.

11. Grill selon la revendication 1, **dans lequel** ce grill est pourvu d'un couvercle (4) comprenant une cheminée (40) .

12. Grill selon la revendication 11, **dans lequel** la cheminée (40) est surmontée soit d'un chapeau de protection de type chinois, soit d'un extracteur éolien.

13. Procédé de grillage **dans lequel** l'aliment est soumis à au moins une étape de positionnement qui est suivie d'une étape de grillage proprement dit, ladite étape de positionnement comprenant le positionnement de l'aliment à griller sur une grille, dans une chambre ouverte (10) au-dessus d'un bac (15) avec de l'eau et en dessous d'une source de chaleur constituée d'au moins un brûleur (11) de gaz combustible, muni d'une plaque micro-perforée (110) irradiant de la chaleur, ledit au moins un brûleur donnant origine, lorsqu'il fonctionne à la puissance maximale, à des températures qui, dans la zone sous la source de chaleur et entre deux plans parallèles espacés de 1 cm l'un de l'autre, le plus élevé coïncidant avec la ou les faces inférieures de ladite ou desdites plaques (110) du au moins un brûleur (11), sont comprises entre 825 °C et 725 °C et qui, sur un plan inférieur auxdits plans, parallèle à ceux-ci et séparé 20 cm de ladite ou desdites faces, sont comprises entre 105 °C et 180 °C, lorsque le gril fonctionne à vide ; et ladite étape de grillage proprement dit comprenant un transfert de chaleur vers l'aliment au moyen d'une irradiation à partir dudit au moins un brûleur à gaz (11), une telle irradiation irradiant principalement le côté supérieur dudit aliment.

14. Procédé de grillage selon la revendication 13, **dans lequel** des grilles froides sont utilisées lors de l'étape de grillage proprement dit.

15. Procédé de cuisson selon la revendication 13, **dans lequel** différents types d'aliments sont soumis aux étapes de placement et / ou grillage proprement dit simultanément dans des sous-chambres séparées dans la chambre ouverte (10), séparées les unes des autres et chacune équipée d'au moins un brûleur (11).
